Europäisches Patentamt

European Patent Office

Office européen des brevets

(11) Publication number: **0 095 935**
**A1**

(12) **EUROPEAN PATENT APPLICATION**

(21) Application number: **83303128.9**

(22) Date of filing: **01.06.83**

(51) Int. Cl.³: **B 62 M 1/10, F 16 H 33/02**

(30) Priority: **02.06.82 GB 8216121**

(43) Date of publication of application: **07.12.83**
**Bulletin 83/49**

(84) Designated Contracting States: **DE FR GB IT NL**

(71) Applicant: **Reader, Gordon Keith, 49 Hayes Chase, West Wickham Kent BR4 0HX (GB)**

(72) Inventor: **Reader, Gordon Keith, 49 Hayes Chase, West Wickham Kent BR4 0HX (GB)**

(74) Representative: **Russell-Rayner, Albert Patrick, 61 Pasture Road, Letchworth Hertfordshire, SG6 3LS (GB)**

(54) **Drive arrangement.**

(57) In a drive apparatus particularly for use with the chain drive of a cycle a rotatable member (13) is arranged to receive rotational drive from the chain (4). The rotatable member is statically and dynamically unbalanced by weight means (19) and is so driven in relation to the positions of the pedal cranks (5, 6) during the rotation thereof by a rider of the cycle that impulses of force are imparted to the chain drive in such manner that the operational forces developed in the chain drive by the rider are augmented.

EP 0 095 935 A1

0095935

-1-

## DRIVE ARRANGEMENT

## BACKGROUND OF THE INVENTION

This invention relates to an arrangement for augmenting the operational force developed in a drive apparatus as a result of applying a given operational load to the drive.

In particular, the present invention relates to cycles and to drive arrangements for cycles.

The bicycle and tricycles are each well known forms of transport and because of this it is thought that a general description of the construction of either form of cycle is not necessary in this specification. It is believed that the reader of this specification will be fully familiar of the main constuctional features of cycles; consequently only those parts of a cycle construction that are involved in the drive arrangements of the invention will be specifically mentioned and disclosed in the drawings.

In the specification considerable discussion will be directed to a detailed consideration of the features germane to the Applicant's invention. At present it is sufficient to note that a cycle proceeds by way of direct reaction to the force applied upon the pedals.

An object of the present invention is to provide a drive arrangement, which in the case of cycles is intended to reduce the work load of a rider of a cycle

-2-

incorporating or fitted with the arrangement of the invention as compared with the workload involved under similar conditions in the absence of the drive arrangement.

A further object of the present invention is, through the employment of the drive arrangements of the invention, to make it possible for the rider of cycle equipped with the drive arrangement to obtain a higher degree of performance as may be compared with the degree of performance which may be obtained under similar conditions in the absence of the drive arrangement.

## SUMMARIES OF THE INVENTION

According to a first aspect of the present invention there is provided an arrangement for augmenting the operational force developed in a drive apparatus as the result of applying a given operational load to the drive, the arrangement including force producing means connectable to receive operational drive from said apparatus for imparting to the drive apparatus a succession of force impulses which act in such manner as to augment the operational force developed as a result of siad load application.

Preferably, the force producing means includes an unbalanced rotatable member which is arranged to be rotated at a predetermined rotational speed in relation to the rate of drive of the drive apparatus, and which is such that the state of the imbalance of the rotatable member imparts upon rotation thereof, impulses of force to the drive apparatus.

Preferably, the drive apparatus incorporates a chain drive, and wherein the rotatable member is adapted to rotate about the same axis of rotation as a driven sprocket wheel or the like of the chain drive.

A further aspect of the invention provides a method of augmenting the operational force developed in a drive apparatus as the result of applying an operational load to the drive apparatus, the method including driving from the drive apparatus means for producing impulses of force and imparting the impulses to the drive apparatus in such manner that the impulses augment the operational force developed in the apparatus as a result of the application of the load.

Conveniently, the impulses are produced by rotating an unbalanced rotatable member at a predetermined rotational speed in relation to the rate of drive of the drive apparatus.

The method is preferably such that when the drive apparatus includes a chain drive the force impulses are produced by rotating an unbalanced rotatable member by means of drive derived from the chain.

Preferably, the rotatable member rotates at twice the speed of the drive chain wheel of the chain drive.

Conveniently, when the rotatable member is a sprocket wheel or the like it is rotable about an axis parallel to the chain drive wheel axis of rotation and is engageable with the chain to be rotated thereby, said sprocket wheel being heavier to one side of a diametrical plane than to the other side of the plane. If desired, the sprocket wheel may be made lighter to one side of the diametrical plane than to the other side of the plane, to achieve a like effect. A weight providing attachment, forming an assembly, can be made such that the assembly can be mounted to rotate with the sprocket wheel to achieve like effect.

Preferably, the construction can be such that the effective mass of the weight can be adjusted so as to enable selective variation of force in the impulse given to the chain, and to allow selective variation in the phasing or timing of the impulse in relation to the main pedal crank.

Conveniently, the plane of rotation of the sprocket wheel is arranged effectively to impart a greater stability to the cycle due to the stabilizing properties attainable from the gyroscopic effects of rotating the sprocket wheel assembly about its axis.

BRIEF DESCRIPTION OF THE DRAWINGS.

For a better understanding of the invention and to show how to carry the same into effect, reference will now be made to the accompanying drawings in which

Figure 1 schematically illustrates a simple form of chain drive as used on a cycle;

Figure 2 illustrates in schematic form the arrangement of the invention when in an operative position, the Figure merely serving to illustrate the general principles;

Figure 3 schematically illustrates to an enlarged scale a detail of the arrangement of Figure 2;

Figure 4 schematically illustrates a further detail of the arrangement of Figure 2;

Figures 5 to 9 very schematically represent states in a cycle of rotation of a chainwheel, rear sprocket and the arrangement of the invention;

Figure 10 schematically illustrates the arrangement of the invention when operatively related to a simple single or fixed speed chain drives and chain drives incorporating multi-speed drives mounted within the hub of a cycle wheel; and

Figure 11 schematically illustrates the arrangement of the invention when operative and related to cycles employing multi-speed chain drive transmissions more commonly known as being of the Derailleur type.

## DESCRIPTION OF THE PREFERRED EMBODIMENTS

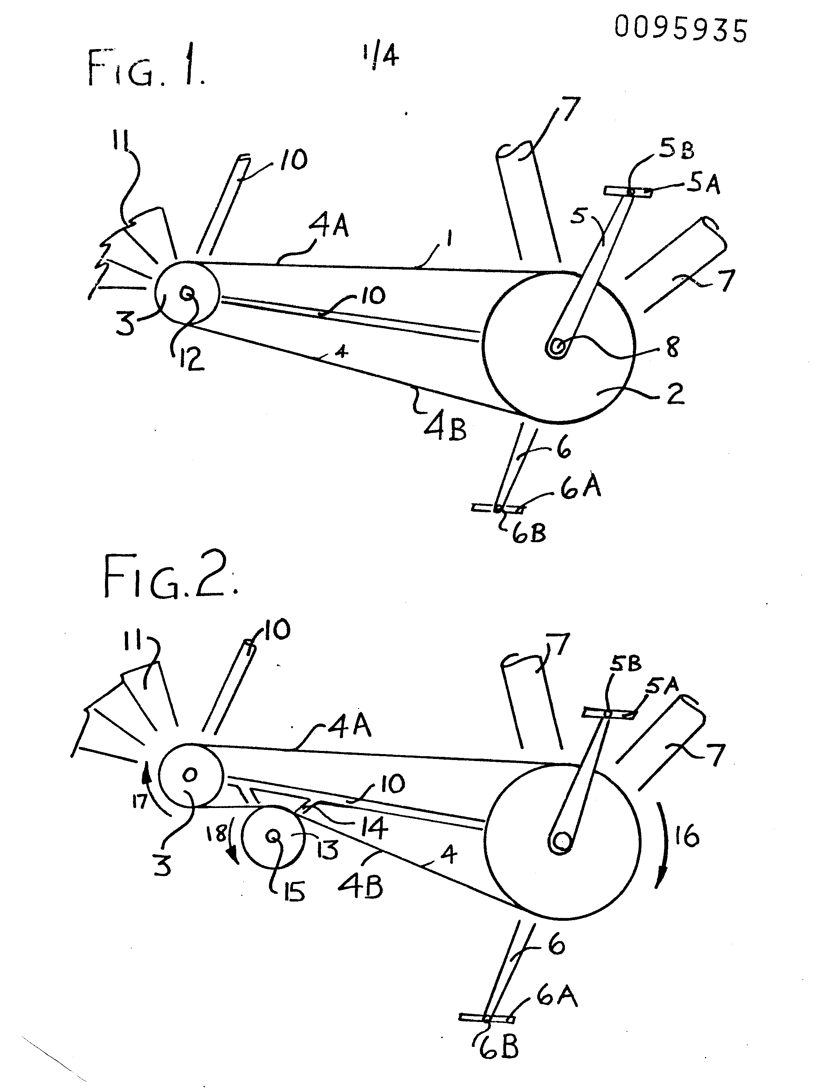

Referring now to Figure 1, this shows a cycle chain drive 1, including a chain drive wheel 2, a rear driven sprocket wheel 3, a chain 4 having an upper run 4A, and a lower run 4B, a right crank arm 5 and associated pedal 5A mounted upon a pivot 5B and a left crank arm 6 and associated pedal 6A mounted upon a pivot 6B.

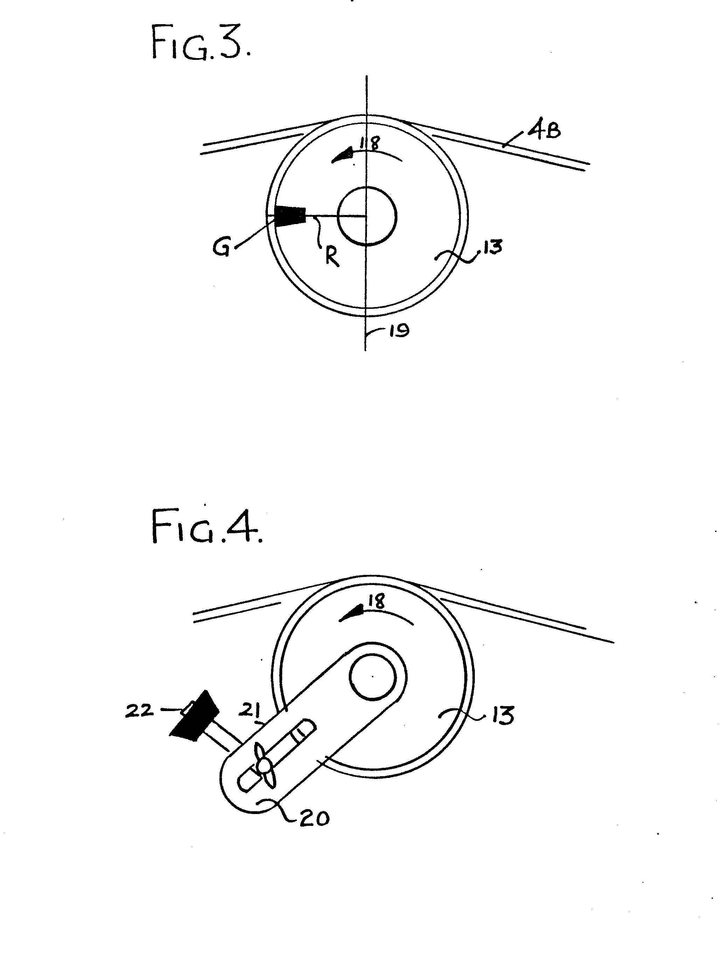

The crank arm 6 is constrained to rotate with the chainwheel 2. The chainwheel and the crank arms are pivotally mounted with respect to the frame 7 of the cycle by means of an axle 8. In the Figure 2 only a fragmentary portion of the frame is shown, the rear wheel 11 being represented merely by fragments of spokes.

As so far described it will be noted that the rotation of the sprocket wheel 3 and thus the rear wheel 11 is caused by drive being transmitted from the chain drive wheel 2 by the chain 4.

In practice, the relative numbers of the teeth on the chain drive wheel 2 and the sprocket wheel 3 define the gear ratio. of the drive and thus the relative speeds of the wheels 2 and 3.

The sprocket wheel 3 may be fixed in the sense that it is able to drive the wheel 11 in either direction of rotation of the chain drive wheel 2, or the sprocket may be able to free-wheel on reverse rotation of the chain wheel. Also, in the latter case the sprocket wheel 3 may be associated with some form of multi-speed gear arrangement such as the in-hub form commonly known as a Sturmey-Archer Gear or chain drive transmissions more commonly known as the Derailleur Gear.

Referring now particularly to Figure 2, this Figure schematically shows the features of the present invention when associated with the chain drive of Figure 1. In accordance with the invention a further sprocket wheel 13 is mounted from the horizontal rails of the frame 7 by means of a support means 14, schematically represented in the Figure, so as to be rotatable about an axis 15 arranged parallel to the axes of rotation of the chain drive wheel 2 and the sprocket wheel 3.

As the axis of rotation of the sprocket wheel 13 is parallel to the axes of rotation of the chain drive wheel 2 and the sprocket wheel 3 this accurately defines the orientation of the axis of rotation of the sprocket wheel 13 and therefore the plane of rotation of the sprocket wheel 13 relative to the frame 7. Thus the said plane of rotation is arranged to be effective in imparting a greater degree of stability to the cycle due to the stabilising effects of a gyroscope attainable from the roatation of the sprocket wheel 13 when rotating in said plane of rotation.

Operationally, the sprocket wheel 13 engages with the lower run 4B of the chain 4, whereby any movement of the chain drive wheel 2 rotates the sprocket wheel 13. In the Figure 2, the directions of rotation of the wheels 2,3 and 13 are indicated by the arrows 16,17,and 18 respectively.

As will be discussed in detail hereinafter the sprocket wheel 13 is effectively weightwise unbalanced, the effect to be considered hereinafter. In addition, the number of teeth on the sprocket wheel 13 is chosen to be one half of the number of teeth provided upon the drive chain wheel 2, whereby the sprocket wheel 13 rotates twice as fast as the rotation rate of the chain drive wheel 2.

The significance of providing the unbalanced sprocket wheel 13 will now be discussed.

For the purpose of description it will be initially presumed that the sprocket wheel 13 is statically and dynamically balanced with respect to its axis of rotation. Under such conditions it will be clear that any rotation of the sprocket wheel relative to the chain run 4B will not produce any forces upon the chain 4 other than a continuous rotational momentum force which will not significantly affect the drive of the chain and thus the cycle. In other words, it will not significantly affect the work rate of the rider necessary in order to achieve a given translation rate for the cycle under given conditions.

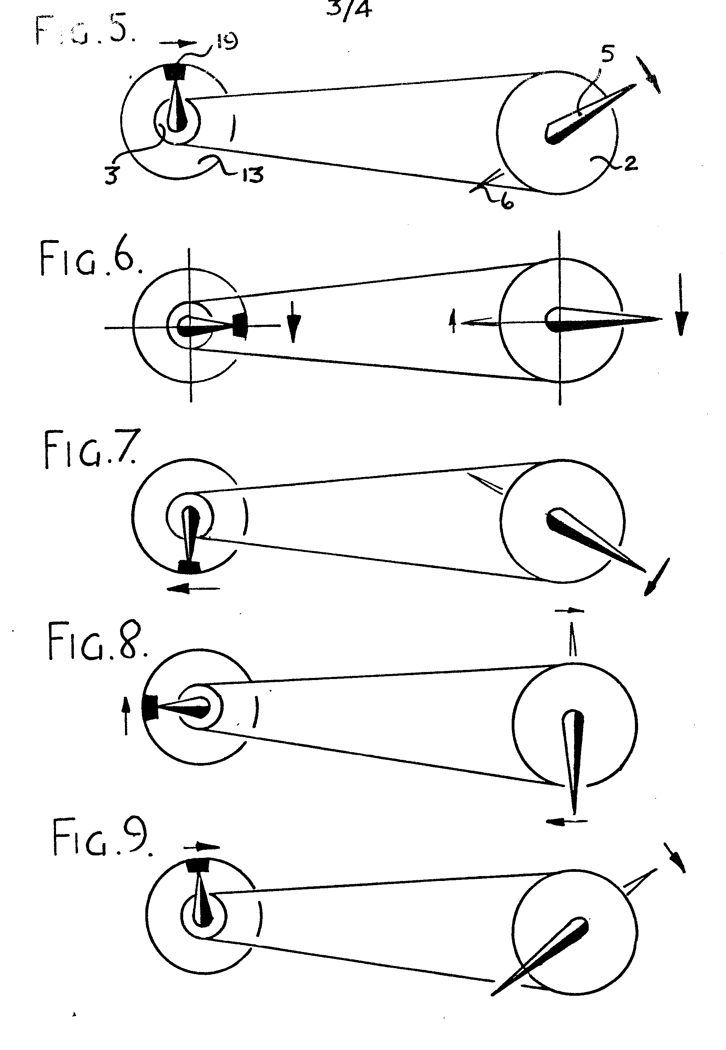

On the other hand, the Applicant has found that if the sprocket wheel 13 is weightwise unbalanced and if the sprocket wheel rotates at a speed of substantially twice that of the chain wheel 2, the forces arising from the effective weightwise unbalancing can be utilised to reduce the work load necessary to achieve said given translation rate, and under the same conditions. In particular, it has been found that if the sprocket wheel 13 rotates at twice the speed of that of the chain wheel 2, and the unbalancing of the sprocket wheel 13 is such as to ensure that the weight distribution of the sprocket wheel to one side of a dimetrical plane 19 of the sprocket wheel (Figure 3) is greater than that to the other side of the plane 19 it is possible to phase the rotation of the sprocket wheel 13 relative to the chain so that the forces arising from the unbalanced condition will augment the drive forces produced in the chain 4 by the pedalling action of the rider.

The preferred phasing or timing of this 'heavy' side of the sprocket wheel 13 with respect to the chain wheel 2 is such that the 'heavy' side of the sprocket wheel 13 is essentially starting its co-operation with the chain linkage of the lower run 4B during that period of the chain wheel rotation at which a pedal crank arm is thirty to fifty degrees beyond its top dead centre position, or in the vicinity thereof, and is thus positioned to be moved further downwards by the rider.

In other words it is believed that the unbalancing of the sprocket wheel 13 has the effect of delivering an impulse of force to the chain run 4B in the direction that tends to drive the chain. That is to say the sprocket wheel 13 effectively exerts a force which assists the rotation of the chain drive wheel 2 and in so doing reduces the amount of work or effort necessary to attain a given translation of speed of the cycle under given conditions as compared with the rate of work

-8-

or effort required in the absence of the unbalanced sprocket wheel 13.

In practice, because of the two to one rotational speed relationship between the chain wheel 2 and the sprocket wheel 13 the latter is able to exert a "pull" each time a pedal crank arm 5 or 6 is moved downward from top dead centre towards the bottom dead centre position.

It will be appreciated that the effect of the weight unbalancing of the sprocket wheel 13 can be regarded as effectively producing a sprocket wheel with a centre of mass located at a point G of the sprocket and at a distance of R from the centre of rotation, whereby the effect of the weight or mass is to produce a drive-couple which is related to the mass and the distance R. This is very schematically shown in Figure 3.

Significantly, according to an aspect of the invention, opposite rotation of the sprocket wheel 13 will not affect the degree of force derived from the said drive-couple so that either direction of rotation may be chosen according to requirements. Conveniently, the sprocket wheel 13 may rotate in either a clockwise or in a counter-clockwise direction as may be considered appropriate to particular requirements. In other words according to the direction of the movement of the chain 4 at the point of engagement with the sprocket wheel 13 so said sprocket wheel 13 will rotate in a clockwise or counterclockwise direction. Very schematically Figures 3 and 10 illustrate respectively examples of counter-clockwise and clockwise rotation appropriately employed.

-9-

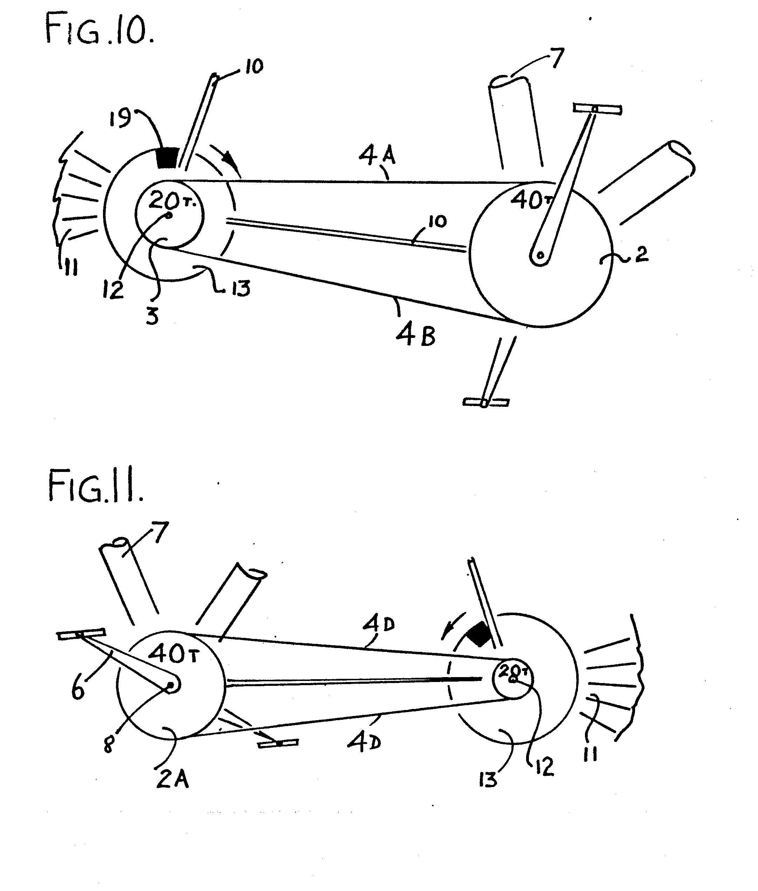

The unbalancing of the sprocket wheel 13 can be achieved in a variety of ways. For example, the actual rear sprocket 3 could be weight loaded to achieve the unbalancing. However, there could be practical limits to this method of attaining the inbalance required and it is therefore preferred to provide an additional weight assembly which is so mounted as to rotate with the sprocket wheel. Figure 4 very schematically illustrates a possible weight structure for unbalancing the sprocket wheel 13. The structure 20 includes a main part 21 and a secondary part 22 which is selectively positionally adjustable with the main part 21 whereby the effective weight or mass of the structure 20 can be selectively adjustable according to particular requirements. It will be appreciated that by providing the 'add-on' form of structure a range of unbalancing is possible.

Conveniently, the rotatable unbalanced load may comprise a plate, which is weightwise loaded to one side of an axial plane. The opposite region of the plate can be lightened by forming a series of lighening holes or cavities to produce the desired imbalance.

In any particular unit the order of the imbalance in regard to cycles is likely to remain in the region of 10 to 1,000 grammes.

In practice, it is convenient to locate the additional sprocket wheel 13 and any associated weight structure 20 within the rails 10 of the frame 7 and also to provide suitable guard arrangements. (These are not shewn).

Conveniently, this satisfactorily accommodates the rotation plane of the unbalanced sprocket wheel 13 in its relativity to the cycle frame 7 in a manner required to secure the gain in the overall stability of the cycle from the gyroscopic effects of rotating the sprocket wheel assembly about its axis.

Reference will now be made to Figures 5 to 9 which very schematically represent states in a cycle of rotation of the weighted rear sprocket wheel 13 and the drive sprocket 3 in their associated with the chain drive wheel 2. In the Figures, the two to one relationship is obtained by having 20 teeth on the sprocket 3 and 40 teeth on the chain drive wheel 2.

Referring now to Figure 5 from a practical aspect, the position of the main driving crank 5 can conveniently be regarded as the position assumed by the rider at the start of using the cycle drive. From the two to one relationship employed it will be realised that for a given rotation of $45^{o}$ of the chain drive wheel 2, the associated sprocket wheel 3 will rotate through $90^{o}$. Thus, from the illustrated position, driving the crank downwardly through $45^{o}$ will rotate the associated sprocket wheel 3, and its associated weight 19 through $90^{o}$ of rotation. It will be noted that the preferred phasing or timing of the sprocket weight 19 in relation to the main crank 5 is such that upon the crank 5 reaching its point of effective maximum leverage, the sprocket and weight will have rotated to a position in which the line joining the centre of the weight with the axis or rotation, is horizontal. Whilst, in practice, the true position of the point of maximum effective crank arm leverage will vary from cycle to cycle according to saddle position, height, etc., for illustration purposes the $90^{o}$ position is deemed to represent for the crank the position of maximum effective leverage, and for the weight the location of maximum torque exerted upon the chain whilst the right hand crank is moving downwardly.

Referring now to Figure 6 from this Figure it will be seen that the torque supplied by the action of the phased weight rotating downwardly through the $90^o$ point in its circle of rotation significantly increases that produced by the user at the position of maximum effective leverage. This augmentation is simply a matter of mechanical routine and occurs each time a crank arm passes the $90^o$ position.

As the cycle proceeds in reaction to the force applied to the pedals, effectively increasing the turning force which can be effectively applied to a cycle crank, increases directly the cycle performance to which it relates.

In other words, the cycle responds exactly to the torque value raised in accordance with Newton's Third Law of Motion, that action and reaction are both equal and opposite.

Referring now to Figure 7, from this Figure it will be seen that the further action of the weight together with the pressure applied by the user to the right hand crank maintains the higher torque value raised during the continued rotation to the position shewn. The vertically downwards direction of kinetic energy changes with rotation to the horizontally rearwards direction, so that in practical terms the inertia of the weight continues to exert a 'pull' upon the lower run of the chain.

Referring now to Figure 8 it will be seen from this Figure that the weight has moved rearward of the axis of the rear sprocket. The kinetic energy force is acting vertically upwards whilst the mass of the weight will be acting vertically downwards, thereby reducing but not negating the overall energy content of the rotating weight.

Referring now to Figure 9 from which it will be seen that the weight has returned to its uppermost position whereby the weight has totally renewed its potential energy, whilst at the same time the left hand crank assumes the 45$^{o}$ position previously assumed by the right hand crank as depicted in Figure 5.

The above discussed sequence of events occuring during a cycle of rotation of the right crank are repeated with the left crank. It will be understood that in practice the sequence of events will be continuously repeated throughout the propulsion of the cycle.

The force impulse of the rotating weight system can be conveniently summarised as follows:-

From Figure 5 it may be noted that :-

(a) Potential energy is at a maximum;

(b) Kinetic energy will be horizontal and forwards;

(c) The centre of mass of the weight is acting vertically downwards through the axis 12 so that the torque is at a minimum.

From Figure 6 it may be noted that :-

(a) Potential energy is reduced by half;

(b) Kinetic energy will be vertically downwards and proportional to the mass of the weight multiplied by its speed;

(c) The centre of mass is acting vertically downwards through a point horizontal to the axis of rotation so that the level of torque is at a maximum.

It has been found that this change in the relative magnitudes in the several components of the energy system has the practical effect of delivering an impulse of force to the drive arrangement thereby augmenting the force being applied by the user at the Figure 6 setting.

From Figure 7 it will be noted that, the weight being at its lowermost position, all potential energy has been converted to kinetic energy, the torque being horizontally and rearwardly directed; whilst at the same time downward pressure to a reduced extent is still being exerted upon the right crank. It will be noted that as is the usual cycling practice the user is not, at this stage, exerting any pressure upon the rising left hand crank. This combination of the various force components and the pressure still being exerted by the user provides a rotational drive which is greater than that available in the absence of the weight; whereby in practical terms the rider is being assisted in the crank turning action.

In the case of the Figure 8 setting, the kinetic energy is acting upwards, producing a torque in the direction of rotation; whilst the effect of the weight is acting downwards tending to reduce the overall effect However, the inertial or 'flywheel' effect is still able to augment the rotational drive in such a manner as to assist the user in turning the right hand crank through the bottom dead centre position and thus to bring the left hand crank over its top dead centre position and consequently through that part of the chain drive wheel rotation at which the operational pressure produced by the user is at its lowest levels.

-14-

The crank setting shewn in Figure 9 is essentially the same as for Figure 5 except that it is the left hand crank that is moving downwards during its cycle of rotation.

It will be noted that whilst the forgoing discussion has been related to a simple single speed chain drive, it has been found that the provision of a multi-speed drive such as a Sturmey Archer type of 'hub' multi-speed drive does not prevent the sprocket wheel 13 from producing said 'pull'. In this connection it will be noted that whilst the effective rear wheel sprocket teeth number changes with a change of gear ratio the relationship between the sprocket wheel 13 and the chain drive wheel 2 remains unchanged. Significantly, where the ratio of teeth on the main chain drive wheel 2 to the number of teeth on the rear wheel sprocket 3 approximates to two to one, the latter may be substituted by the sprocket wheel 13 operating in lieu thereof together with its associated weight 19, the location about the axle 12 being most suitable for simple single or fixed speed cycles in addition to multi-speed transmissions of the Sturmey Archer 'hub' type. Significantly, the two to one ratio between the chain drive wheel 2 and the sprocket wheel 13 must remain in order to maintain the set phasing of the drive-couple relative to the main pedal crank. Figure 10 very schematically illustrates the invention in an operative position when used in conjunction with the 'hub' gears of the Sturmey Archer type and where the ratio of the number of teeth on the chain drive wheel 2 compared to the number of teeth on the sprocket substituted by the sprocket wheel 13 may remain at two to one.

In the case of multi-speed arrangements which involve the actual derailing of the chain 4 from one sprocket wheel to another according to the number of driven teeth required to be used, reference will now be made to Figure 11, in which the arrangements of the invention may be regarded as being viewed from the left hand side of the cycle. Figure 11 schematically shews the features of the present invention when associated with the chain drive of Figure 1 and to cycles employing multi-speed drives of all types, but particularly with reference to multi-speed drives of the Derailleur type.

It is important to realise that the Figure 11 illustrates the cycle as seen from the left hand side and illustrates a chain wheel 2A and a chain 4D which are additional to the main chain wheel and chain drive carried on the right hand side of the cycle in the normal way. As may be seen from the illustration the chain 4D connects the chain wheel 2A to the sprocket wheel 13 which is located about the rear axle 12 being mounted between the rear cycle wheel, shewn by the fragmentary spokes 11 and the left hand side rails 10 of the frame 7.

It is not though necessary to discuss the general principles of operation as these have already been discussed herein, but to merely illustrate a method of application to cycles utilising chain transmissions of the Deraileur type and to bicycles in general.

In reviewing the methods of connecting the assembly which provides the drive-couple, by means of which additional torque is made available to a main drive member such as a chain wheel and associated crank it will be noted that the above discussions have been centred around chain drives and particularly to chain drives of cycles. It will however be understood that the principles of the invention may be applied to other forms of drive such as, for example, shaft drives, gear drives, epicyclic gear drives and belt drives or the like into which may be introduced the feature of an unbalanced rotatable member as above discussed.

-17-

CLAIMS

1. An arrangement for augmenting the operational force developed in a drive apparatus as a result of applying a given operational load, characterised in that the arrangement includes force producing means (13,19) connectable to receive operational drive from said apparatus (4,2) for imparting to the drive apparatus a succession of force impulses which act in such manner as to augment the operational force developed as a result of . said load application.

2. An arrangement as claimed in claim 1, and characterised in that the force producing means (13,19) includes an unbalanced rotatable member (13;20-22) which is arranged to be rotated at a predetermined rotational speed in relation to the rate of drive of the drive apparatus (2,4), and in that the state of imbalance of the rotatable member (13; 20-22) imparts upon rotation thereof impulses of force to the drive apparatus.

3. An arrangement as claimed in claim 2, and characterised in that the phasing of the rotatable member (13,;20-22) is selectively variable in its relationship with the drive apparatus.

4. An arrangement as claimed in claim 2 or 3, and characterised in that when the drive apparatus includes a chain drive (2,3,4) the rotatable member (13) is adapted to rotate about the same axis of rotation (12) as a driven sprocket wheel (3) or the like of the chain drive or about an axis (15) spaced from but parallel to the axis of rotation (12) of the driven sprocket wheel (3).

5. An arrangement as claimed in claim 4, and characterised in that the driven sprocket wheel or the like (13) is itself unbalanced whereby the rotatable member is operationally effectively incorporated in the driven sprocket wheel or the like (3), and in that the rotation ratio between the drive wheel (2) and the driven sprocket wheel or the like (3) is such that the latter rotates at twice the rate of the chain drive wheel (2).

6. An arrangement as claimed in claim 4, and characterised in that the rotatable member is constituted by an attachment (20-22) which is adapted for engagement with the chain (4) of the chain drive in such manner that the rotatable member is able to receive the rotational drive from the chain.

7. An arrangement as claimed in claim 6, and characterised in that the inbalance of the rotatable member is arranged to be effected by displacing the centre of mass (G) of a weight (22) radially of the axis of rotation of the rotatable member (20-22).

8. An arrangement as claimed in claim 3, and characterised in that the adjustment to the state of imbalance is arranged to be effected by varying the magnitude of the weight or the like that produces the imbalance.

9. A method of augmenting the operational force developed in a drive apparatus as the result of applying an operational load to the drive apparatus, characterised by the step of driving from the drive apparatus means for producing impulses of force and imparting the impulses to the drive apparatus in such manner that the impulses augment the operational force developed in the apparatus as a result of the application of the load.

10. A method as claimed in claim 9, and characterised in that the impulses are produced by rotating an unbalanced rotatable member (13;20-22) at a predetermined rotational speed in relation to the rate of drive of the driven apparatus (2,4)

0095935

FIG. 1.

FIG. 2.

FIG.3.

FIG.4.

Fig.5.

Fig.6.

Fig.7.

Fig.8.

Fig.9.

FIG.10.

FIG.11.

European Patent Office

**EUROPEAN SEARCH REPORT**

## DOCUMENTS CONSIDERED TO BE RELEVANT

EP 83303128.9

| Category | Citation of document with indication, where appropriate, of relevant passages | Relevant to claim | CLASSIFICATION OF THE APPLICATION (Int. Cl. ³) |
|---|---|---|---|
| X | <u>US - A - 4 201 396</u> (GESSI) | 1,2,9, 10 | B 62 M 1/10 |
| Y | * Fig. 3 * | 4,5 | F 16 H 33/02 |
| | -- | | |
| X | <u>DE - C - 9 362</u> (BENNECKENDORF) | 1,2,9, 10 | |
| Y | * Fig. 1; claim * | 4,5 | |
| | -- | | |
| X | <u>US - A - 4 019 396</u> (FRECHETTE) | 1,2,9, 10 | |
| A | * Claim 7 * | 7 | |
| | -- | | |
| X | <u>GB - A - 8 24 642</u> (HUMPHREY) | 1,9 | |
| Y | * Fig. 1; page 1, lines 9-11, 20-22 * | 4,5 | **TECHNICAL FIELDS SEARCHED (Int. Cl. ³)** |
| A | | 6 | |
| | -- | | B 62 M |
| P,X | <u>US - A - 4 353 569</u> (MOLINA) | 1,9 | F 16 H |
| P,Y | * Fig. 2; column 1, lines 41-46 * | 4,5 | |
| A | | 6 | |
| | ---- | | |

The present search report has been drawn up for all claims

| Place of search | Date of completion of the search | Examiner |
|---|---|---|
| VIENNA | 20-07-1983 | BAUMGARTNER |